# FASCICULE DE BREVET EUROPEEN

(11) **EP 0 630 573 B1**
(45) Date de publication et mention de la délivrance du brevet: **11.08.1999**
(21) Numéro de dépôt: 94401400.0
(22) Date de dépôt: 22.06.1994
(51) Int. Cl.: A23G 3/00

(54) **Confiserie aérée et grainée et procédé de fabrication de ladite confiserie**
Belüftete und feinkörnische Süsswarenmasse und Herstellungsverfahren derselben
Aerated and fine-grained confectionary and process for making the same

(30) Priorité: 24.06.1993 FR 9307697
(43) Date de publication de la demande: 28.12.1994
(73) Titulaire: Roquette Frères, 62136 Lestrem (FR)
(72) Inventeur: Serpelloni, Michel, F-62660 Beuvry les Bethune (FR); Ribadeau-Dumas, Guillaume, F-59130 Lambersart (FR)
(74) Mandataire: Boulinguiez, Didier

(56) Documents cités:
- EP-A- 0 009 325
- EP-A- 0 273 001
- FR-A- 2 357 185
- GB-A- 1 239 056
- US-A- 4 018 901
- US-A- 4 127 645
- US-A- 4 698 232
- DATABASE WPI Derwent Publications Ltd., London, GB; AN 89-304888 & JP-A-1 225 458 (MITSUBISHI ET AL.) 8 Septembre 890

## Description

La présente invention concerne une nouvelle confiserie aérée et grainée obtenue par emploi d'une quantité appropriée de mannitol et/ou d'érythritol ainsi qu'un procédé de fabrication de ladite confiserie.

L'expression "confiserie aérée et grainée" désigne pour l'homme du métier une classe très particulière de produits de confiserie toujours considérés comme très délicats à produire. Ces produits présentent une structure physique très complexe à la fois comparable à celle d'une mousse et d'une dispersion et parfois même à celle d'une émulsion.

Il s'agit en premier lieu de mousses en raison de la présence au sein de ces confiseries d'un réseau gazeux constitué en général de bulles d'air et conférant à ces articles une densité plus faible que celle de la très grande majorité des produits de confiserie. L'aération résulte d'opérations mécaniques spécifiques telles que l'étirage, le battage ou du choix d'ingrédients particuliers et appropriés, en particulier d'agents de foisonnement.

Les confiseries aérées et grainées sont également des dispersions stables du fait de la présence dans ces produits de très fins cristaux indécelables par les papilles de la bouche et uniformément répartis dans un sirop sucré saturé comprenant les molécules solubles. Dans le cas de confiseries de sucre, les microcristaux en question sont composés de saccharose.

Enfin, ces confiseries peuvent être également des émulsions de type huile dans eau lorsque les produits contiennent des matières grasses. La phase grasse est alors dispersée sous forme de gouttelettes dans la phase aqueuse continue.

Les confiseries du type de celles faisant l'objet de l'invention se caractérisent habituellement par une teneur en eau comprise entre 3 et 15 % et en général comprise entre 7 et 10 %, et par une texture courte et non filante, tendre et masticable sans être collante aux dents, et de plus légère et fondante. Contrairement aux chewing-gums, ces confiseries se dissolvent totalement sans laisser aucun résidu solide insoluble dans la bouche.

Concrétement, les confiseries aérées et grainées faisant l'objet de l'invention seront, sans que la liste ci-après soit limitative, des fondants, des guimauves grainées, des caramels tournés ou fudgés, des "toffees" cristallisées, des nougats, des "turrons", des pâtes à mâcher fudgées ou des mousses aromatisées microcristallisées.

Ces articles comprennent parfois des agents de garniture comme des cacahuètes, des graines de sésame, des noix hâchées, des amandes, du riz soufflé, de la noix de coco râpée et dans d'autres cas en tant qu'agents de fourrage, de la liqueur, des fourrages gras, des pâtes chocolatées. Il est à noter que ces articles peuvent par ailleurs être utilisés pour garnir ou couvrir d'autres produits de confiserie et de chocolaterie, tout comme des produits de biscuiterie.

Seront exclus par contre de la présente invention, les produits non aérés ou ne contenant pas d'édulcorant à l'état cristallisé comme par exemple les caramels mous, les nougats ou nougatines tendres, les guimauves classiques tels que les têtes de négre, les souris en mousse, les chewing-gums.

De nos jours, pour ce qui concerne la confiserie et les friandises, il semble que de nouvelles tendances fortes de consommation se dessinent. Les notions d'équilibre nutritionnel et d'hygiène de vie sont consciemment ou non prises en compte dans l'alimentation d'aujourd'hui. Bien que le plaisir du sucré reste toujours très vivace, bon nombre de consommateurs souhaitent éviter les problèmes liés à la consommation des sucres. C'est dans ce but que les confiseurs ont été amenés à développer des formulations sans sucre dans lesquelles les polyols appelés parfois sucre-alcools trouvent un juste emploi en raison de leur innocuité vis-à-vis des dents et de leur caloricité réduite par rapport au saccharose.

L'une des grandes difficultés auxquelles les formulateurs de confiseries sans sucre ne peuvent se soustraire est celle de réussir la fabrication de produits en tous points semblables aux produits traditionnels au point de s'y méprendre, ceci sans avoir à modifier ou à complexifier de façon importante les installations et les procédures en place dans les industries. Cela vaut également pour les confiseries objets de la présente invention.

On connaît divers documents témoignant de recherches actives dans ce sens. On peut citer en particulier :
- les brevets US 4.597.981 et US 4.963.359 relatifs tous deux à des confiseries tendres sans sucre contenant de la gélatine. Celles-ci sont non grainées en raison de l'absence d'emploi de molécules édulcorantes cristallisables.
- les brevets FR 2.522.936, US 4.323.588, et US 4.450.179 concernant des guimauves et des nougats sans sucre ou des articles tendres sans sucre comportant une coque et un centre, obtenus par association du sirop de glucose hydrogéné non cristallisable commercialisé par la demanderesse sous la marque LYCASIN^{R} et d'isomaltulose hydrogéné cristallisable. Bien qu'il s'agisse là de confiseries tendres aérées, il n'est jamais question de fabriquer des produits de texture courte mais seulement des produits peu hygroscopiques ne s'affaissant pas à la conservation. Ceci étant, cette texture courte ne peut être obtenue par emploi d'isomaltulose hydrogéné que si, comme l'a observé la demanderesse, la concentration en ce polyol est très élevée dans la confiserie. Ceci entraîne en raison des particularités communes aux polyols de faible poids moléculaire, le risque d'engendrer des troubles digestifs chez certains sujets prédisposés, d'autant plus que ce phénomène est amplifié par le fait que ces confiseries de par leur texture particulière se consomment facilement. Ainsi, les produits décrits dans ce document ne sont pas satisfaisants sur tous les plans.
- la demande de brevet français n° 2.338.651 dans laquelle est revendiquée un nouveau procédé de fabrication de bonbons à pâte molle présentant une structure cristalline. Ce procédé convient tout aussi bien à l'obtention de produits classiques que des produits sans sucre. Le mannitol est cité parmi les nombreux substituts possibles des sucres, mais le xylitol, préféré en raison de la sensation de fraîcheur qu'il procure en bouche, est utilisé en tant que seul et unique substitut de mélanges de sucre et de sirop de glucose. La demanderesse a constaté que cela ne s'avère pas possible avec le mannitol.
- la demande de brevet européen n° 377.278 ayant trait à une composition édulcorante diététique, dans laquelle sont décrites des pâtes à mâcher grainées, contenant également du xylitol. Ce dernier représente toujours au moins 38 % de la charge édulcorante ce qui compte tenu de son prix sur le marché, tend à dissuader les industriels de son emploi dans une telle application. Par ailleurs, les produits obtenus les plus intéressants du point de vue de leurs textures et de leurs stabilités nécessitent des températures de cuisson très élevées voisines de 165°C mais également la maturation de la masse cuite durant une nuit avant d'être travaillée à nouveau. On comprend qu'une mise en place industrielle d'un tel procédé s'avère très délicate.
- la demande de brevet européen n° 9.325 relative à des compositions anti-caries à base d'érythritol et notamment des fudges et des marshmallows. Les produits obtenus conformément aux exemples donnés présentent une facheuse tendance à cristalliser entièrement au cours du stockage et à acquérir une texture râpeuse et sableuse en bouche.
- les brevets EP 273.001 et US 4.911.935 décrivant des produits de type nougat, obtenus par addition à un frappé dépourvu de mannitol mais contenant obligatoirement une cellulose insoluble et une cellulose modifiée soluble, un sirop cuit composé du sirop de glucose hydrogéné et de mannitol. En fait, l'invention telle que décrite dans le brevet EP 273.001 repose sur l'utilisation de celluloses natives ou modifiées afin de conférer aux confiseries contenant un sirop de glucose hydrogéné une structure suffisamment visqueuse, de sorte que l'écoulement lors du stockage de celles-ci soit rendu difficile et que leur caractère collant désagréable soit atténué. Il n'est nullement question dans ce brevet de préparer des confiseries aérées et grainées présentant une texture courte et non filante. Il convient de noter que ce document tend à laisser penser qu'il est inconcevable de préparer des confiseries qualitativement acceptables du type auquel on s'intéresse dans la présente invention, avec mannitol et sirop de glucose hydrogéné, sans employer impérativement des celluloses. L'homme du métier sait que ces dernières sont d'un emploi difficile en confiserie car elles génèrent par cuisson des goûts et des colorations parasites et un caractère râpeux en bouche, dépréciatifs de la qualité, de sorte que la solution proposée est insatisfaisante.

Le brevet GB 1,239,056 décrit des aliments sucrés comprenant moins de 15 % de carbohydrates fermentescibles et moins de 5 % de glucose. Il est indiqué que ces aliments sucrés peuvent également comprendre un monosaccharide faiblement fermentescible tel que du galactose, du sorbitol ou du mannitol. Mais les pourcentages en polyols ne sont pas ceux utilisés dans la présente demande de brevet.

Il n'existe donc pas ainsi à l'heure actuelle de solutions techniquement ou économiquement viables permettant la fabrication de confiseries aérées et grainées, présentant les caractéristiques qualitatives énoncées plus haut.

Fort de ce constat, la demanderesse s'est attachée à remédier à cette carence tout en se donnant comme objectif essentiel celui de réduire au maximum les quantités de polyols cristallins à employer dans la préparation de telles confiseries. Ceci se justifie pour des raisons d'ordre technique liées à l'aisance des fabrications mais aussi d'ordre économique et métabolique c'est à dire en particulier de tolérance digestive. De plus, il est particulièrement avantageux de limiter autant que possible l'incorporation de polyols cristallins qui, certes sont moins caloriques que le sucre, mais le sont plus que d'autres agents de charges susceptibles d'entrer également dans la formulation de telles confiseries, de sorte qu'ainsi, si cela est désiré, un allégement calorique nettement plus important peut être obtenu.

Enfin, il est également possible d'envisager, grâce à l'emploi d'une quantité faible de polyols cristallins, l'introduction de substances aux propriétés nutritionnelles ou pharmacologiques intéressantes comme des minéraux, des vitamines, des acides gras essentiels, et ceci en quantité non négligeable.

C'est après maints essais que la demanderesse a eu le mérite de constater, de façon surprenante et inattendue que parmi l'ensemble des polyols cristallins, seuls le mannitol et l'érythritol permettaient de produire des confiseries d'excellente stabilité et de texture courte, à un taux d'emploi, ramené à la charge édulcorante présente dans les confiseries, particulièrement bas.

L'invention a donc pour objet une confiserie aérée et grainée sans sucre, exempte de composés cellulosiques dérivés de la cellulose, comportant un polyol choisi dans le groupe du mannitol, de l'érythritol et des mélanges quelconques de ceux-ci, caractérisée en ce que ledit polyol constitue de 13,5 % à 28 % de la charge édulcorante de ladite confiserie , considérée à l'état sec.

La demanderesse a constaté que lorsque la teneur en l'un ou l'autre de ces deux polyols est faible c'est à dire inférieure à 13,5 % par rapport à la charge édulcorante, on obtient alors toujours une texture longue et filante et un produit ayant tendance à coller au papier d'emballage.

A l'inverse, lorsque cette teneur est forte et dépasse 28 % de la charge édulcorante totale de la confiserie, teneur qui reste cependant inférieure au taux de sucre rapporté à la charge édulcorante des articles traditionnels de confiserie de ce genre, d'ordinaire compris entre 50 et 75 %, il a été vérifié qu'avec le mannitol et l'érythritol, contrairement à ce que l'on observe avec le sorbitol, l'isomaltulose hydrogéné ou encore le maltitol, un grainage complet des confiseries s'observe au cours du temps dans la majorité des cas, conduisant à l'obtention d'un produit cassant et très sableux en bouche. Parfois et ceci se produit notamment avec l'érythritol, on obtient à l'inverse pour des concentrations élevées, une masse excessivement fluide après cuisson qu'il est difficle de travailler sur machine. Il est certes possible de pallier partiellement ce problème en augmentant les températures de cuisson ou en ajoutant des agents viscosifiants tels des polysaccharides naturels ou de synthèse, mais ceci n'est pas avantageux.

Il est donc essentiel que la teneur en mannitol ou en érythritol ne soit ni trop faible, ni trop élevée afin que la texture de la confiserie aérée et grainée soit correcte dès l'origine et par conséquent adaptée à un travail sur machine et afin que cette texture n'évolue pas au cours du stockage.

La teneur exacte en mannitol ou en érythritol variera avec la nature du produit fabriqué mais aussi en fonction de la texture finale désirée. Cette dernière pourra être ajustée par le choix des autres ingrédients et par la teneur en eau de la confiserie.

De façon générale, les quantités nécessaires en mannitol seront plus faibles dans le cas d'une pâte à mâcher que dans le cas d'un nougat dur. Cette règle vaut également pour l'érythritol, mais les quantités à introduire dans ce cas, pour obtenir un produit de texture similaire, seront légèrement plus élevées que pour le mannitol.

Dans la pratique, on retiendra pour le mannitol une teneur rapportée à la charge édulcorante de préférence comprise entre 13,5 % et 25 %, plus préférentiellement comprise entre 13,7 % et 20 % et mieux encore comprise entre 14 % et 17 %.

En ce qui concerne l'érythritol, son taux d'emploi ne dépassera jamais 40 % mais sera de préférence compris entre 13,5 % et 28 % et plus préférentiellement entre 14 % et 27 % et mieux encore compris entre 16 % et 25 %.

Il est également possible de combiner le mannitol et l'érythritol afin de contrôler la cristallisation de l'un d'eux par l'autre. Dans ce cas, les teneurs préférées en ces polyols sera également comprises entre 13,5 % et 28 % par rapport à la charge édulcorante totale de la confiserie, considérée en sec.

La teneur optimale en mannitol ou en érythritol pourra aisément être déterminée par l'homme du métier par quelques essais de routine selon que son installation industrielle autorise une fabrication des confiseries par coulage, moulage, découpe ou encore par extrusion.

Selon l'invention, la charge édulcorante constitutive de la confiserie aérée et grainée, comportera outre le mannitol ou l'érythritol, des sirops de polyols ou des sirops d'oligosaccharides ou de polysaccharides, de préférence hydrogénés.

Par sirops de polyols, on entend ici les sirops de mono et de disaccharides hydrogénés et en particulier ceux de xylitol, de sorbitol et de maltitol. Par sirops d'oligosaccharides ou de polysaccharides, on désigne les hydrolysats d'amidon hydrogénés pauvres en sorbitol et en maltitol, l'inuline et ses dérivés, les dextrines et leurs dérivés et en particulier les hydrolysats de dextrines de préférence hydrogénés, et les produits communément appelés polydextroses et les polyglucoses, lesquels seront également de préférence hydrogénés.

La charge édulcorante sera majoritairement composée des sirops ci-dessus, seuls ou en mélanges, étant entendu que rien n'empêche, bien qu'alors le coût devienne un facteur limitant, d'utiliser les mêmes produits à l'état déshydraté ou à l'état cristallisé.

La charge édulcorante pourra comprendre en tant qu'éléments constitutifs mineurs, des agents viscosifiants comme la gomme arabique, des agents modificateurs de l'activité de l'eau comme la glycérine ou encore des édulcorants intenses comme l'aspartame ou l'acésulfame.

Dans la pratique, cette charge édulcorante considérée en sec représentera de 60 à 96 %, de préférence de 70 à 90 % et plus préférentiellement de 75 à 88 % de la confiserie telle que commercialisée.

Les confiseries aérées et grainées de l'invention présenteront toujours une densité inférieure à 1,5 par rapport à l'eau. Lorsqu'il s'agit en particulier de nougats, de pâtes à mâcher, de caramels et de guimauves grainées, les confiseries comporteront des agents de foisonnement afin de faciliter la création d'une structure comparable à celle d'une mousse. Ces agents seront des protéines d'origine animale ou végétale comme la gélatine, les protéines de lait, les protéines de poisson, les hydrolysats de gluten, les protéines de soja, l'albumine de blanc d'oeuf.

En ce qui concerne les gélatines, l'aptitude à donner ou non des gels consistants c'est à dire pour l'homme du métier le degré bloom, sera pris en compte pour les dosages. Ainsi, on préférera retenir des gélatines de très hauts blooms lorsque l'on souhaitera limiter l'apport en protéines ou bien obtenir une texture élastique. Rien n'interdira également au contraire d'utiliser des protéines en tant que produits de charge, comme par exemple dans le cas de confiseries diététiques ou pharmaceutiques. On retiendra de préférence alors les gélatines de bas blooms, les protéines laitières et de blanc d'oeuf.

Ces agents de foisonnement représenteront de préférence 0,5 à 15 % de la confiserie telle que commercialisée.

Les pâtes à mâcher et les nougats comporteront également comme il est d'usage pour les formulations classiques, de la matière grasse dans des proportions appropriées connues de l'homme du métier. En ce qui concerne sa nature, il s'agira de préférence d'une matière grasse laitière ou d'une huile végétale hydrogénée, de palme, de coprah ou encore de soja. Ces matières grasses pour des raisons organoleptiques possèderont avantageusement un point de fusion sensiblement voisin de la température buccale, et seront de préférence employées à un taux compris entre 1 et 10 %.

L'emploi d'un émulsifiant sera facultatif, notamment lorsque des teneurs élevées en protéines seront présentes. Il n'empêche que lorsque de la matière grasse viendra à être utilisée en quantité non négligeable dans la formulation des confiseries selon l'invention, il sera toujours préférable de prévoir son ajoût à un taux de 0,1 à 2 % par rapport à la confiserie. Cet émulsifiant pourra être choisi en particulier parmi les lécithines, les esters gras de glycérol, de saccharose ou de sorbitol.

Les confiseries aérées et grainées présenteront de plus et de façon générale, une teneur en eau variant entre 3 et 15 %, de préférence entre 4 et 10 % et plus préférentiellement entre 5 et 8 %. On retiendra des valeurs plutôt basses pour des pâtes à mâcher ou des nougats et des valeurs plus élevées pour des fondants ou bien des guimauves grainées. Il est à noter que par rapport aux recettes classiques, les teneurs en eau devront en général être légèrement plus faibles.

Les confiseries aérées et grainées conformes à l'invention présentent avantageusement la caractéristique de pouvoir être préparées selon les procédés conventionnels déjà en place dans les industries. Ces procédés pourront être des méthodes nécessitant une cuisson ou bien des méthodes à froid à l'instar de celle décrite dans le brevet FR 2.338.651 mentionné plus haut ou de celles utilisées pour fabriquer des chewing-gums.

Il conviendra toutefois d'adapter légèrement les conditions de fabrication de manière à ce que la teneur en eau finale des confiseries soit comprise entre 3 et 15 %.

De préférence, on procédera à la solubilisation du polyol cristallin et à la cuisson à une température supérieure à 105°C, et d'ordinaire comprise entre 110 et 135°C et de préférence entre 110 et 128°C, d'au moins 75 % de la charge édulcorante comprenant le mannitol ou l'érythritol. La température exacte de cuisson variera selon le type d'évaporateur en place et notamment le niveau de vide appliqué mais aussi selon le type de confiserie à obtenir. On ajoutera ensuite à la masse cuite refroidie au dessous de la température de cuisson les autres ingrédients susceptibles d'entrer dans la composition de la confiserie comme les arômes, les matières grasses, les agents viscosifiants, les agents acidulants et colorants, les émulsifiants, les agents de charge et les agents de foisonnement. Ces derniers pourront être apportés sous forme de solutions de manière à faciliter leur incorporation.

Dans une variante du procédé, on pourra également procéder à la cuisson du mélange édulcorant avec les ingrédients de la formulation non sensibles au traitement thermique.

La cristallisation nécessaire à l'obtention d'une texture courte pourra être spontanée. Un simple refroidissement de la masse cuite ou un simple transfert mécanique de celle-ci est susceptible en effet d'amorcer la cristallisation. Mais, de préférence, on provoquera cette dernière par ajoût au mélange édulcorant cuit d'une poudre de mannitol ou d'érythritol d'un diamètre moyen inférieur à 100 microns, ou par l'ajoût d'un fondant comprenant ces polyols cristallins. Cette addition pourra représenter de 0,1 à 25 % de la charge édulcorante de la confiserie.

On procédera alors à un travail de la masse cuite dans le but de permettre la propagation de la cristallisation mais aussi dans le but de l'aérer. On pourra par exemple utiliser un batteur à pression d'air ou une étireuse. On veillera à réaliser ce travail sur machine à une température adéquate de sorte que la viscosité de la masse soit correcte. Cette opération sera conduite de manière à obtenir une confiserie présentant une densité par rapport à l'eau comprise généralement entre 0,4 et 1,3 et de préférence entre 0,6 et 1,25. Dans le cas d'un marshmallow grainé, cette valeur sera plutôt comprise entre 0,4 et 0,8 alors que pour un caramel fudgé, un nougat ou une pâte à mâcher, celle-ci variera de 0,8 à 1,20 et approchera en général 1,05. Il est à noter que cette densité devra être légérement plus basse que celle d'une confiserie classique pour obtenir le résultat recherché.

Enfin, la masse résultante, éventuellement refroidie et maturée sera mise en forme par exemple par coulage dans l'amidon ou encore, par extrusion ou moulage suivi d'une découpe. Les articles refroidis seront ensuite emballés.

Selon un second mode de fabrication, qualifié de procédé à froid, on procédera au simple mélange intime dans les proportions correctes et à une température comprise entre 45° et 90°C, d'une part d'une poudre de mannitol et/ou d'érythritol de fine granulométrie et d'autre part de la charge édulcorante complémentaire apportée sous forme d'un sirop concentré. La granulométrie de la poudre sera de préférence inférieure à 100 microns de façon à ce que la confiserie ne présente pas une texture sableuse en bouche. La matière sèche du sirop édulcorant complémentaire dépassera de préférence 85 % et mieux encore 90 %. On ajoutera également les autres ingrédients éventuels de la confiserie. Dans ce cas, les agents de foisonnement seront également introduits sous forme d'un sirop. Il est à noter que selon ce second mode de fabrication, il n'est pas utile de provoquer une cristallisation par l'ajoût d'une amorce ou d'un fondant de mannitol ou d'érythritol.

Les étapes d'aération et de mise en forme selon ce procédé à froid se réaliseront tel que décrit ci-dessus.

L'invention sera mieux comprise à l'aide des exemples qui suivent.

### EXEMPLE 1

### Comportement de différents polyols cristallins et effet de la concentration en polyols par rapport à la charge édulcorante totale.

On compare le comportement de poudres de haute pureté de sorbitol, d'isomaltulose hydrogéné, de xylitol, de mannitol, d'érythritol et de maltitol dans les trois types de formulations de pâte à mâcher ci-dessous de façon à déterminer lesquels d'entre ces polyols cristallins permettent d'obtenir une texture courte et non filante à un taux d'emploi par rapport à la charge édulcorante, inférieur à celui du sucre dans les pâtes à mâcher traditionnelles. Les formulations de base retenues, respectivement appelées Formule A, Formule B et Formule C sont les suivantes :

### - Formule A

| | |
|---|---|
| - Sirop de maltitol LYCASIN^{R} 80/55 (MS:75 %) | 5000 g |
| - Polyol cristallin | 3200 g |
| - Protéines de lait délactosées | 1120 g |
| - Coprah hydrogéné (point de fusion 32°C) | 395 g |
| - Monostéarate de glycérol | 39 g |
| - Solution de gélatine 180 Blooms (MS:40%) | 196 g |
| - Polyol cristallin finement broyé (amorce) | 50 g |

Le taux de polyol cristallin par rapport à la charge édulcorante, exprimé en sec/sec, est de 46,5 %.

### - Formule B

La formulation est identique à la formule A en dehors du fait que :
- le sirop LYCASIN^{R} 80/55 est ajouté à raison de 6400 g
- et le polyol cristallin ne représente que 1800 g seulement Le taux de polyol cristallin est dans cette formulation de 28 %.

### - Formule C

La formulation est également la même que la formule A mais les quantités utilisées :
- pour le sirop LYCASIN^{R} 80/55 est de 7330 g
- pour le polyol cristallin est de 870 g

Le taux de polyol cristallin n'est que de 14,3 %.

Pour préparer des pâtes à mâcher, on procéde pour les formules A, B et C :
- à la cuisson à environ 120°C du mélange LYCASIN^{R} 80/55 et du polyol cristallin,
- à l'incorporation lors du refroidissement du mélange cuit, des protéines de lait vers 100°C environ, de la matière grasse et de l'émulsifiant vers 90°C, de la solution de gélatine vers 85°C et enfin de la poudre de polyol en tant qu'amorce de cristallisation vers 80°C,
- à l'étirage de la pâte résultante pendant une minute de façon à obtenir une densité proche de 1,04,
- et au formage et à la découpe de la pâte et enfin à l'emballage des produits sous papillotes.

La teneur en eau des produits est dans tous les cas proche de 6,5 %.

Les pâtes à mâcher obtenues avec les différents polyols (18 au total) sont stockées pendant deux mois dans des conditions ambiantes de température et d'humidité.

A ce terme, les produits sont comparés entre eux. On note en particulier la tendance au collage au papier et la texture du produit.

Les produits préparés avec sorbitol, xylitol et maltitol sont tous très collants. Leurs textures sont tendres et filantes. On n'obtient donc jamais avec ces polyols, à ces taux d'emploi, les caractéristiques recherchées.

Les produits avec l'isomaltulose hydrogéné sont satisfaisants uniquement selon la formule A. Avec la formule B, la pâte à mâcher est tendre et filante, mais aussi légèrement collante. Celle préparée avec la formule C ressemble fortement à celles décrites plus haut avec sorbitol, xylitol et maltitol.

Avec mannitol et érythritol, les pâtes à mâcher selon les formules B et C présentent exactement les caractéristiques recherchées c'est à dire sont non collantes et de texture courte. En revanche, la formule A avec mannitol est entièrement grainée et particulièrement déplaisante à la dégustation. La formule A avec érythritol bien que microcristallisée est collante.

On retiendra que parmi l'ensemble des produits préparés, seules les pâtes à mâcher avec érythritol ou mannitol et contenant 14,3 % et 28 % de polyol cristallin par rapport à la charge édulcorante exprimée en sec, correspondent aux produits recherchés.

Trois essais complémentaires sont réalisés selon la formule D ci-dessous en utilisant en tant que polyol cristallin du mannitol, de l'érythritol ou un mélange contenant 80 % de mannitol et 20 % d'érythritol de façon à ce que le taux de polyol cristallin ramené à la charge édulcorante sèche soit proche de 13 %.

### - Formule D

| | |
|---|---|
| - Sirop de maltitol LYCASIN^{R} 80/55 (MS:75%) | 7420 g |
| - Polyol cristallin | 780 g |
| - Protéines de lait délactosées | 1120 g |
| - Coprah hydrogéné (point de fusion:32°) | 395 g |
| - Monostéarate de glycérol | 39 g |
| - Solution de gélatine 180 Blooms (MS:40%) | 196 g |
| - Polyol cristallin | 50 g |

Les pâtes à mâcher après deux mois de stockage dans des conditions ambiantes, bien que non collantes, présentent dans les trois cas une texture insuffisamment courte. Elles ne correspondent pas exactement aux produits recherchés.

### EXEMPLE 2

### Pâtes à mâcher selon l'invention.

On réalise deux nouvelles productions de pâtes à mâcher avec mannitol en reprenant la formule C décrite dans l'exemple précédent.

Dans un cas, on remplace la quantité de solution de gélatine 180 blooms par une quantité équivalente de solution à 40 % de matière sèche d'une gélatine 100 blooms. Le mode opératoire décrit plus haut est conservé.

Dans le second cas, on réduit la quantité de protéines délactosées à 300 g et on ajoute en tant que complément 820 g d'une solution de gélatine zéro bloom à 50 % de matière sèche. On suit également le mode opératoire donné dans l'exemple précédent en dehors du fait que la température de cuisson est de 130°C.

Les produits obtenus sont dans les deux cas très stables et présentent les caractéristiques de texture souhaitées. Par rapport aux produits comportant une gélatine 180 blooms, ceux avec gélatine 100 blooms sont plus tendres et ceux contenant moins de protéines de lait plus élastiques en bouche.

### EXEMPLE 3

### Nougats conformes à l'invention.

On procéde à la fabrication de nougats à découper contenant environ 16 % de mannitol par rapport à la charge édulcorante considérée en sec, en utilisant les produits suivants :

| Partie A : | |
|---|---|
| Sirop de maltitol LYCASIN^{R} 80/55 | 6 800 g |
| Mannitol | 800 g |

| Partie B : | |
|---|---|
| Solution d'albumine de blancs d'oeuf à 33 % de matière sèche | 240 g |

| Partie C : | |
|---|---|
| Mannitol SF (100 microns de diamètre moyen) | 160 g |
| Amandes | 2000 g |

Pour cela, on cuit la partie A à 120°C dans un chaudron. Au cours du refroidissement, on ajoute vers 110°C au sirop cuit la partie B, avant de procéder à un battage de façon à obtenir une structure aérée semblable à celle d'une mousse.

On incorpore vers 75°C la partie C, et on laisse refroidir la masse vers 40°C avant de la découper. On obtient ainsi des nougats aérés et grainés très semblables aux nougats traditionnels de Montélimar. Ces produits sont stables et conservent après plusieurs mois de stockage, une texture courte et non filante semblable à celle d'origine.

## Revendications

1. Confiserie aérée et grainée exempte de composés cellulosiques comportait un polyol choisi dans le groupe comprenant le mannitol, l'érythritol et les mélanges de ceux-ci caractérisée en ce que ledit polyol constitue de 13,5 % à 28,0 % par rapport à la charge édulcorante totale de la confiserie, considérée en sec.

2. Confiserie selon la revendication 1 caractérisée en ce que le mannitol est utilisé et constitue de 13,5 à 25 %, de préférence de 13,7 à 20 % et plus préférentiellement de 14 à 17 % par rapport à la charge édulcorante totale de la confiserie, considérée en sec.

3. Confiserie selon la revendication 1 ou 2 caractérisée en ce que l'érythritol est utilisé et constitue de 14 à 27 %, de préférence de 16 à 25 % par rapport à la charge édulcorante totale de la confiserie, considérée en sec.

4. Confiserie selon l'une des revendications 1 à 3 caractérisée en ce que la charge édulcorante qu'elle comporte représente de 60 à 96 % de préférence de 70 à 90 % et plus préférentiellement de 75 à 88 % de la confiserie, considérée en sec.

5. Confiserie selon l'une des revendications 1 à 4 caractérisée en ce que sa densité par rapport à l'eau est comprise entre 0,4 et 1,3 de préférence entre 0,6 et 1,25 et plus préférentiellement entre 0,8 et 1,20 et en ce qu'elle contient un agent de foisonnement à raison de 0,2 à 15 %.

6. Confiserie selon l'une quelconque des revendications 1 à 5 caractérisée en ce qu'elle contient une matière grasse et un émulsifiant, respectivement à raison de 1 à 10 % et de 0,1 à 2 %.

7. Confiserie selon l'une quelconque des revendications 1 à 6 caractérisée en ce que sa teneur en eau est comprise entre, 3 % et 15 %; de préférence 4 et 10 % et plus préférentiellement entre 5 et 8 %.

8. Confiserie selon l'une quelconque des revendications 1 à 7 caractérisée en ce que la charge édulcorante est constituée, en dehors du mannitol et/ou de l'érythritol, d'au moins un produit choisi parmi les sirops de polyols et les sirops d'oligosaccharides et de polysaccharides, éventuellement associé à un édulcorant intense, un agent de viscosifiant ou un modificateur de l'activité de l'eau.

9. Procédé de fabrication d'une confiserie selon l'une quelconque des revendications 1 à 8 caractérisé en ce que :
- on procède à la cuisson à une température comprise entre 110°C et 135°C d'au moins 75 % de la charge édulcorante de la confiserie comprenant de 13,5 % à 28,0 % par rapport à la charge édulcorante totale de la confiserie considérée en sec, de mannitol et/ou d'érythritol à l'état solubilisé,
- on ajoute une poudre ou un fondant comprenant du mannitol et/ou de l'érythritol à la masse cuite à hauteur de 0,1 à 25 %,
- on procède à un travail de la masse résultante afin de l'aérer avant de la mettre en forme et d'emballer la confiserie obtenue.

10. Procédé de fabrication d'une confiserie selon l'une quelconque des revendications 1 à 8 caractérisé en ce que :
- on mélange intimement dans des proportions correctes et à une température comprise entre 45°C et 90°C, d'une part une poudre de mannitol et/ou d'érythritol de fine granulométrie et d'autre part une charge édulcorante complémentaire sous forme d'un sirop concentré, lesdits mannitol et/ou érythritol constituant de 13,5 % à 28,0 % par rapport à la charge édulcorante totale de la confiserie considérée en sec,
- on procède à un, travail de la masse résultante afin de l'aérer, avant de la mettre en forme et d'emballer la confiserie obtenue.

## Claims

1. Aerated and grainy confectionery product free from cellulose compounds, containing a polyol selected from the group comprising mannitol, erythritol and mixtures thereof, characterized in that the said polyol constitutes from 13.5% to 28.0% of the total sweetening component of said product, on a dry basis.

2. Confectionery product according to claim 1, characterized in that mannitol is used and constitutes from 13.5 to 25%, preferably from 13.7 to 20% and more preferably from 14 to 17% of the total sweetening component of said product, on a dry basis.

3. Confectionery product according to claim 1 or 2, characterized in that erythritol is used and constitutes from 14 to 27% and preferably from 16 to 25% of the total sweetening component of said product, on a dry basis.

4. Confectionery product according to one of claims 1 to 3, characterized in that the sweetening component which it contains represents from 60 to 96%, preferably from 70 to 90% and more preferably from 75 to 88% of the confectionery product, on a dry basis.

5. Confectionery product according to one of claims 1 to 4, characterized in that its density relative to water is between 0.4 and 1.3, preferably between 0.6 and 1.25 and more preferably between 0.8 and 1.20, and in that it contains an overrun agent in the proportion of 0.2 to 15%.

6. Confectionery product according to any one of claims 1 to 5, characterized in that it contains a fat and an emulsifier, in the proportion of 1 to 10% and 0.1 to 2%, respectively.

7. Confectionery product according to any one of claims 1 to 6, characterized in that its water content is between 3% and 15%, preferably between 4 and 10% and more preferably between 5 and 8%.

8. Confectionery product according to any one of claims 1 to 7, characterized in that the sweetening component consists, besides mannitol and/or erythritol, of at least one product chosen from among polyol syrups and oligosaccharide and polysaccharide syrups, combined where appropriate with an intense sweetener, a viscosity modifying agent or a water activity modifier.

9. Process for manufacturing a confectionery product according to any one of claims 1 to 8, characterized in that:
- cooking of at least 75% of the sweetening component of the confectionery product comprising 13.5% to 28.0% with respect to the total sweetening component of the confectionery product, on a dry basis, of mannitol and/or erythritol in the solubilized state, is performed at a temperature of between 110°C and 135°C,
- a powder or a fondant comprising mannitol and/or erythritol is added to the cooked mass in a proportion of 0.1 to 25%,
- working of the resulting mass is performed in order to aerate it, before shaping it and wrapping the confectionery product obtained.

10. Process for manufacturing a confectionery product according to any one of claims 1 to 8, characterized in that :
- on the one hand a mannitol and/or erythritol powder of fine particle size, and on the other hand a complementary sweetening component in the form of a concentrated syrup, said mannitol and/or erythritol constituting from 13.5 to 28.0% of the total sweetening component of the confectionery product, on a dry basis, are mixed thoroughly in correct proportions and at a temperature of between 45°C and 90°C,
- working of the resulting mass is performed in order to aerate it, before shaping it and wrapping the confectionery product obtained.

## Patentansprüche

1. Belüftete und gekörnte Süßware, die frei von Cellulose-Verbindungen ist, enthaltend ein Polyol, gewählt aus der Mannitol, Erythritol und deren Mischungen umfassenden Gruppe, dadurch gekennzeichnet, daß das genannte Polyol 13,5 % bis 28,0 % bildet, bezogen auf die Gesamtmenge an Süßungsmittel in der Süßware, als Trockensubstanz betrachtet.

2. Süßware nach Anspruch 1, dadurch gekennzeichnet, daß Mannitol verwendet wird und 13,5 % bis 25 %, vorzugsweise 13,7 % bis 20 % und noch bevorzugter 14 % bis 17 % bildet, bezogen auf die Gesamtmenge an Süßungsmittel in der Süßware, als Trockensubstanz betrachtet.

3. Süßware nach Anspruch 1 oder 2, dadurch gekennzeichnet, daß Erythritol verwendet wird und 14 % bis 27 %, vorzugsweise 16 % bis 25 % bildet, bezogen auf die Gesamtmenge an Süßungsmittel in der Süßware, als Trockensubstanz betrachtet.

4. Süßware nach einem der Ansprüche 1 bis 3, dadurch gekennzeichnet, daß die Menge an Süßungsmittel, die sie enthält, 60 % bis 96 %, vorzugsweise 70 % bis 90 % und noch bevorzugter 75 % bis 88 % der Süßware darstellt, als Trockensubstanz betrachtet.

5. Süßware nach einem der Ansprüche 1 bis 4, dadurch gekennzeichnet, daß ihre Dichte, bezogen auf Wasser, zwischen 0,4 und 1,3, vorzugsweise zwischen 0,6 und 1,25 und noch bevorzugter zwischen 0,8 und 1,20 beträgt, und dadurch, daß sie ein Aufquellmittel im Verhältnis von 0,2 % bis 15 % enthält.

6. Süßware nach irgendeinem der Ansprüche 1 bis 5, dadurch gekennzeichnet, daß sie ein Fett und einen Emulgator enthalt, jeweils im Verhältnis von 1 % bis 10 % und 0,1 % bis 2 %.

7. Süßware nach irgendeinem der Ansprüche 1 bis 6, dadurch gekennzeichnet, daß ihr Gehalt an Wasser zwischen 3 % und 15 %, vorzugsweise zwischen 4 % und 10 % und noch bevorzugter zwischen 5 % und 8 % beträgt.

8. Süßware nach irgendeinem der Ansprüche 1 bis 7, dadurch gekennzeichnet, daß die Menge an Süßungsmittel, außer Mannitol und/oder Erythritol, von mindestens einem Produkt gebildet wird, das unter den Sirups von Polyolen und den Sirups von Oligosacchariden und Polysacchariden ausgewählt wird, gegebenenfalls assoziiert mit einem intensiven Süßstoff, einem viskositätserhöhenden Mittel oder einem Modifikator für die Wasseraktivität.

9. Verfahren zur Herstellung einer Süßware nach irgendeinem der Ansprüche 1 bis 8, dadurch gekennzeichnet, daß man
- das Kochen bei einer Temperatur zwischen 110 °C und 135 °C von mindestens 75 % der Menge an Süßungsmittel der Süßware durchführt, die 13,5 % bis 28,0 % Mannitol und/oder Erythritol im gelösten Zustand enthält, bezogen auf die Gesamtmenge an Süßungsmittel in der Süßware, als Trockensubstanz betrachtet,
- ein Mannitol und/oder Erythritol enthaltendes Pulver oder Fondant zu der Kochmasse in einer Höhe von 0,1 % bis 25 % hinzusetzt,
- eine Bearbeitung der sich ergebenden Masse durchführt, um sie zu belüften, bevor sie geformt und die so erhaltene Süßware verpackt wird.

10. Verfahren zur Herstellung einer Süßware nach irgendeinem der Ansprüche 1 bis 8, dadurch gekennzeichnet, daß man
- einerseits ein Pulver von Mannitol und/oder Erythritol von feiner Granulometrie und andererseits eine ergänzende Menge an Süßungsmittel in Form eines konzentrierten Sirups in genauen Verhältnissen und bei einer Temperatur zwischen 45 °C und 90 °C innig vermischt, wobei das genannte Mannitol und/oder Erythritol 13,5 % bis 28,0 % bilden, bezogen auf die Gesamtmenge an Süßungsmittel in der Süßware, als Trockensubstanz betrachtet,
- eine Bearbeitung der sich ergebenden Masse durchführt, um sie zu belüften, bevor sie geformt und die so erhaltene Süßware verpackt wird.
